Europäisches Patentamt

European Patent Office

Office européen des brevets

(19)

(11) Veröffentlichungsnummer: **0 241 643**
**A1**

(12) **EUROPÄISCHE PATENTANMELDUNG**

(21) Anmeldenummer: **87100937.9**

(22) Anmeldetag: **23.01.87**

(51) Int. Cl.⁴: **D01D 5/42 , D02J 13/00**

(30) Priorität: **14.02.86 DE 3604703**

(43) Veröffentlichungstag der Anmeldung:
**21.10.87 Patentblatt 87/43**

(84) Benannte Vertragsstaaten:
**AT DE FR GB IT**

(71) Anmelder: **Windmöller & Hölscher**
**Münsterstrasse 50**
**D-4540 Lengerich(DE)**

(72) Erfinder: **Bosse, Frank, Dipl.-Ing.**
**Bodelschwinghweg 16**
**D-4542 Tecklenburg(DE)**
Erfinder: **Lage, Karl-Heinz**
**Ringeler Strasse 50**
**D-4540 Lengerich(DE)**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Phillipps**
**- Dr. P.B. Schäuble Dr. S. Jackermeier -**
**Dipl.-Ing. A. Zinnecker**
**Widenmayerstrasse 23 D-8000 München**
**22(DE)**

(54) **Ofen zur Erwärmung zu verstreckender thermoplastischer Bändchen.**

(57) Ein Ofen (10) zur Erwärmung einer Schar von in einer Ebene parallel zueinander frei durch diesen hindurchlaufenden, zu verstreckenden Bändchen (8) aus thermoplastischem Material besteht aus einem kastenförmigen Gehäuse. Diese Gehäuse ist auf gegenüberliegenden Seiten mit fluchtenden Schlitzen zum Ein-und Auslauf der Bändchenschar und mit einer Heizeinrichtung zum Erwärmen seines Innenraums versehen. Um die Verstreckungspunkte der Bändchen in dem Ofen an eine vorbestimmte Stelle oder in einen bestimmten Bereich zu verlagern, ist das Gehäuse im Bereich der Verstreckungszone der Bändchen (8) mit mindestens einem Fenster (14,15) versehen, das durch durchsichtiges plattenförmiges Material geschlossen ist.

Fig.1

## Ofen zur Erwärmung zu verstreckender thermoplastischer Bändchen

Die Erfindung betrifft einen Ofen zur Erwärmung einer Schar in einer Ebene parallel zueinander frei durch diesen durchlaufender, zu verstreckender Bändchen aus thermoplastischem Material, bestehend aus einem kastenförmigen Gehäuse, das auf gegenüberliegenden Seiten mit fluchtenden Schlitzen zum Ein-und Auslauf der Bändchenschar und mit einer Heizeinrichtung zum Erwärmen seines Innenraums versehen ist.

Aus der DE-OS 17 79 155 ist eine Einrichtung zur Erwärmung zu verstreckender thermoplastischer Bändchen oder Kunststoffstreifen bekannt, die aus einer gewölbten beheizten Platte besteht, über die die Bändchen in Gleitkontakt mit dieser laufen. Bei dieser Einrichtung besteht jedoch die Gefahr, daß die Bändchen an der beheizten Platte ankleben. Weiterhin ist durch äußere Temperaturschwankungen eine konstante gleichmäßige Wärmezufuhr zu den Bändchen nicht gewährleistet. Schließlich können je nach Einsatzort Verschmutzungen der Bändchen nicht vermieden werden und es tritt eine unerwünschte Reibung zwischen den Bändchen und der Platte auf.

Aus der DE-PS 23 28 639 ist ein Ofen der eingangs angegebenen Art bekannt, der diese Nachteile vermeidet. Dieser bekannte Ofen bildet eine Konvektions-Heißluftstrecke, in der die Bändchen gleichmäßig erwärmt werden, ohne daß sie Teile des Ofens berühren, so daß ein Ankleben und ein Verschmutzen der Bändchen vermieden ist.

Bei Öfen dieser Art kann es jedoch vorkommen, daß bei Verwendung unterschiedlicher thermoplastischer Materialien oder einer Änderung der Umgebungsbedingungen bei einen Standardeinstellung von Streckverhältnis und Temperaturprogramm der Verstreckungspunkt der Bändchen aus der Heißluftstrecke in Richtung Extruder herauswandert. Für ein Bändchen mit den gewünschten exakten physikalischen Eigenschaften ist es aber notwendig, daß der Verstreckpunkt in einem bestimmten Bereich der Heißluftstrecke liegt. Ist der Verstreckpunkt aus der Heißluftstrecke herausgetreten und läßt man ihn durch Beeinflussung der dessen Lage bestimmenden Parameter wieder in die Heißluftstrecke hineinwandern, ist es nicht möglich, dessen genaue Lage innerhalb der Heißluftstrecke zu bestimmen. Da eine genaue Positionierung des Verstreckpunktes innerhalb der Heißluftstrecke des Ofens nicht möglich ist, läßt sich nicht feststellen, ob die Länge der Heißluftstrecke optimal genutzt wird.

Aufgabe der Erfindung ist es daher, einen Ofen der eingangs angegebenen Art zu schaffen, der es gestattet, die Verstreckungspunkte der Bändchen an eine vorbestimmte Stelle oder in einen bestimmten Bereich zu verlagern.

Erfindungsgemäß wird diese Aufgabe bei einem Ofen der gattungsgemäßen Art dadurch gelöst, daß das Gehäuse im Bereich der Verstreckungszone der Bändchen mit mindestens einem Fenster versehen ist, das durch durchsichtiges Material geschlossen ist. Durch dieses Fenster läßt sich die Lage der Verstreckpunkte der Bändchen in der Heißluftstrecke des Ofen beobachten und durch entsprechende Beeinflussung der Parameter auf eine bestimmte Stelle einstellen, wenn die Verstreckpunkte nach der einen oder der anderen Seite auswandern sollten.

Der erfindungsgemäße Ofen erlaubt eine optimale Nutzung der Heißluftstrecke, da deren Temperatur auf das erforderliche Niveau abgesenkt werden kann, so daß eine Energieersparnis erreicht wird. Weiterhin lassen sich die Verstreckpunkte in dem gewünschten Bereich halten, so daß die Qualität der Bändchen durch eine optimale Durchführung des Verstreckungsprozesses auf einem hohen Niveau gehalten werden kann. Der erfindungsgemäße Ofen stellt sicher, daß die Bändchen einerseits über eine möglichst lange Verweilzeit vor dem Verstreckungspunkt bei niedriger Temperatur im Ofen gehalten werden und daß andererseits der Verstreckungspunkt nicht zu tief in den Ofen hineinwandert, so daß eine größtmögliche Verweillänge in dem Ofen erreicht wird, die für eine gute Homogenisierung infolge des Durchwärmens erforderlich ist.

Aus der DE-OS 32 46 574 ist eine Vorrichtung zur elektrostatischen Spritzlackierung von kontinuierlich auf einem Förderer geförderten Kunststoffteilen bekannt, die im Bereich von Spritzpistolen mit einer Spritzkabine versehen ist, die zur Beobachtung des Lackiervorganges mit einem Fenster versehen ist. Zweckmäßigerweise sind die Fenster durch zwei im Abstand voneinander angeordnete Scheiben geschlossen, so daß der Raum zwischen den Scheiben derart beheizt werden kann, daß die Fenster keine das Temperaturprofil der Heißluftstrecke beeinträchtigende Kältebrücken bilden.

Die den Raum zwischen den Scheiben erwärmende Heizeinrichtung besteht zweckmäßigerweise aus mindestens einem an der oberen oder unteren Begrenzungswandung des Fensterdurchbruchs angeordneten Heizstab.

Ein Ausführungsbeispiel der Erfindung wird nachstehend anhand der Zeichnung näher erläutert. In dieser zeigt

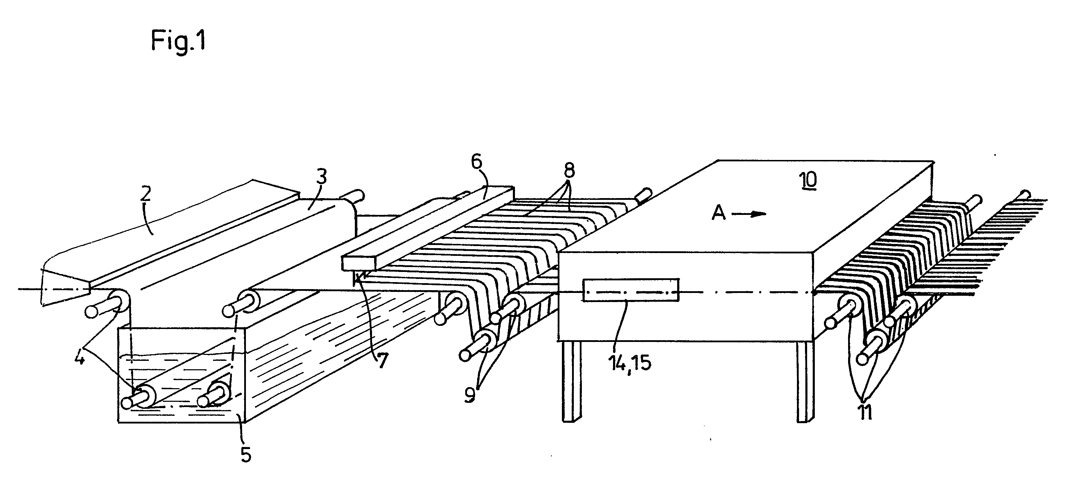

Fig. 1 eine Bändchenreckanlage in perspektivischer Darstellung,

Fig. 2 den Heißluftofen der Bändchenreckanlage nach Fig. 1 in Seitenansicht,

Fig. 3 den Ofen gemäß Fig. 2 in Draufsicht, teilweise im Schnitt, wobei die Bändchen sichtbar dargestellt sind,

Fig. 4 den Ofen nach Fig. 2 im Schnitt und

Fig. 5 den in Fig. 4 strichpunktiert eingekreisten Teil in vergrößerter Darstellung.

Aus der Breitschlitzdüse 1 wird eine Kunststoffbahn in Form des Films 3 extrudiert. Dieser Film 3 läuft über die Umlenkwalzen 4 und wird durch diese durch ein Kühlbad 5 geführt. Hinter dem Kühlbad 5 ist ein Messerbalken 6 vorgesehen, der mit einer Messerschar 7 besetzt ist. Von dieser Messerschar 7 wird die Folienbahn in einzelne Streifen oder Bändchen 8 geschnitten. Diese Bändchen durchlaufen ein aus Walzen aufgebautes Haltewerk 9 und gelangen von diesem Haltewerk in einen Ofen 10, in dem die Bändchen erhitzt werden. Der Ofen ist ein Heißluftofen, dem in nicht dargestellter Weise warme Luft zugeführt wird, die im Innern des Ofens durch Leitbleche o. dgl. derart verteilt wird, daß sich ein gleichmäßiges Temperaturprofil einstellt.

Unmittelbar hinter dem Ofen 10, den die Bändchen in Pfeilrichtung A durchlaufen, ist ein Streckwerk 11 vorgesehen. Das Reckverhältnis beträgt etwa 1:6.

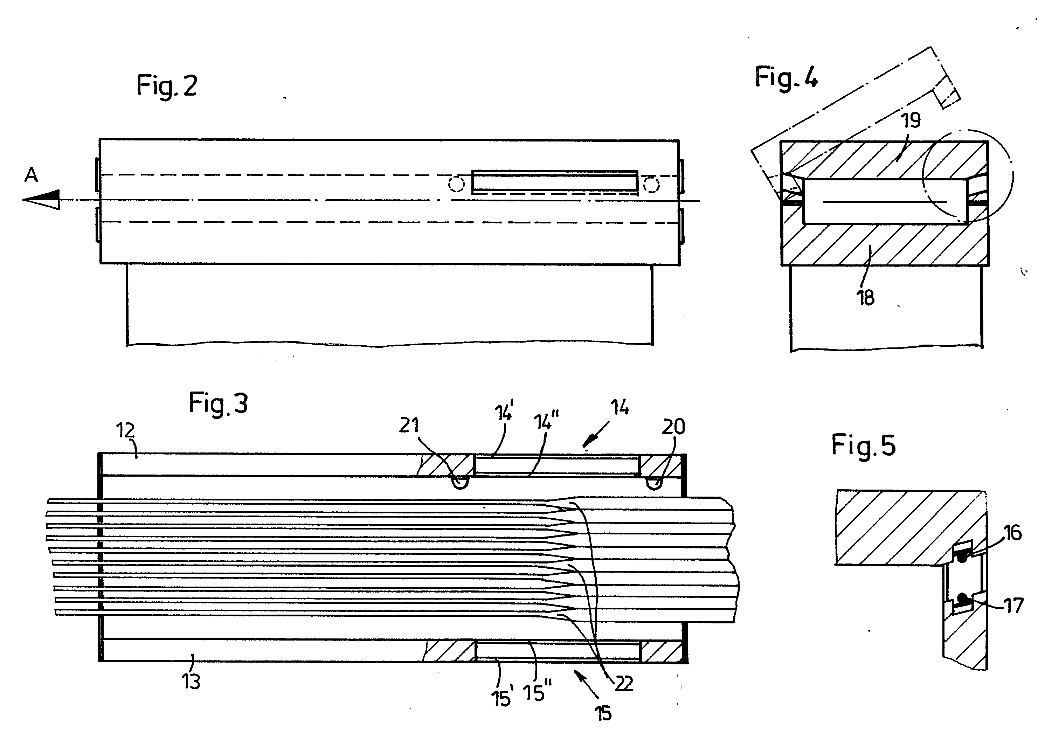

Aus den Figuren 2 - 4 ist zu erkennen, daß die beiden Seitenwände 12 und 13 des Ofens 10 jeweils ein Fenster 14 und 15 aufweisen, wobei die Fenster aus zwei mit Abstand zueinander angeordneten Scheiben 14′, 14″ bzw. 15′, 15″ gebildet sind. In dem durch die beiden Fenster 14′ und 14″ bzw. 15′ und 15″ gebildeten Hohlraum sind jeweils zwei Heizstrahler 16 und 17 vorgesehen, die so ausgelegt sind, daß der Wärmedurchgang durch ein Fenster nicht größer ist als der Wärmedurchgang durch die doppelwandigen Gehäuseteile 18 und 19, wobei das obere Gehäuseteil 19, in dem sich die Fenster 14 und 15 befinden, hochklappbar ist.

Wie die Fig. 3 zeigt, befinden sich im Inneren des Ofens 10 im Bereich des Fensters 14 zwei Lampen 20 und 21, die die einwandfreie Beobachtung der Bändchenschar ermöglichen. Der Maschinenführer kann bei einem so ausgestatteten Ofen nun genau die Lage der Verstreckpunkte der einzelnen Bändchen beobachten und, falls erforderlich, eine Korrektur am Auslaufspalt der Breitschlitzdüse 2 vornehmen.

**Ansprüche**

1. Ofen zur Erwärmung einer Schar von in einer Ebene parallel zueinander frei durch diesen hindurchlaufenden, zu verstreckenden Bändchen aus thermoplastischem Material, bestehend aus einem kastenförmigen Gehäuse, das auf gegenüberliegenden Seiten mit fluchtenden Schlitzen zum Ein- und Auslauf der Bändchenschar und mit einer Heizeinrichtung zum Erwärmen seines Innenraums versehen ist, **dadurch gekennzeichnet,** daß das Gehäuse im Bereich der Verstreckungszone der Bändchen mit mindestens einem Fenster (14, 15) versehen ist, das durch durchsichtiges plattenförmiges Material geschlossen ist.

2. Ofen nach Anspruch 1, dadurch gekennzeichnet, daß das Fenster (14, 15) in einer Seitenwand des Gehäuses angeordnet ist, die parallel zur Laufrichtung ist und senkrecht zur Ebene der Bändchenschar (8) steht.

3. Ofen nach Anspruch 1 oder 2, dadurch gekennzeichnet, daß das Fenster (14, 15) eine längliche Form hat und sich über den Verstreckungsbereich (22) der Bändchen (8) erstreckt.

4. Ofen nach einem der Ansprüche 1 bis 3, dadurch gekennzeichnet, daß zwei Fenster (14, 15) in gegenüberliegenden Seitenwänden vorgesehen sind.

5. Ofen nach einem der Ansprüche 1 bis 4, dadurch gekennzeichnet, daß jedes Fenster durch im Abstand voneinander angeordnete Scheiben (14′, 14″; 15′, 15″) geschlossen ist und daß in dem Raum zwischen den Scheiben eine Heizeinrichtung angeordnet ist.

6. Ofen nach Anspruch 5, dadurch gekennzeichnet, daß die Heizeinrichtung aus mindestens einem an der oberen oder unteren Begrenzungswandung des Fensterdurchbruchs angeordneten elektrischen Heizstab (16, 17) besteht.

7. Ofen nach einem der Ansprüche 1 bis 6, dadurch gekennzeichnet, daß in dem Innenraum des Gehäuses mindestens eine Beleuchtungslampe (20, 21) vorgesehen ist.

Fig.1

Fig.2

A

Fig.4

19

18

0 241 643

Fig.3

12    21   14'  14"   14    20

13    15' 15"  15    22

Fig.5

16

17

**Europäisches Patentamt**

## EINSCHLÄGIGE DOKUMENTE

EP 87100937.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | <u>GB - A - 1 229 217</u> (PLASTICISERS) <br> * Gesamt * <br> -- | 1 | D 01 D 5/42 <br> D 02 J 13/00 |
| Y | <u>AT - B - 190 626</u> (BEMBERG) <br> * Fig. 1-3; Seite 2, Zeilen 39-46; Anspruch 5 * | 1 | |
| A | <br> ---- | 5 | |

| RECHERCHIERTE SACHGEBIETE (Int. Cl.4) |
|---|
| D 01 D 5/00 |
| D 02 J 1/00 |
| D 02 J 13/00 |
| B 29 C 55/00 |
| B 29 D 7/00 |
| F 27 D 21/00 |

Der vorliegende Recherchenbericht wurde für alle Patentansprüche erstellt.

| Recherchenort | Abschlußdatum der Recherche | Prüfer |
|---|---|---|
| WIEN | 17-04-1987 | ERNST |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82